# EUROPEAN PATENT SPECIFICATION

(11) **EP 3 065 372 B1**
(45) Date of publication and mention of the grant of the patent: **08.05.2019**
(21) Application number: 16158117.8
(22) Date of filing: 01.03.2016
(51) Int. Cl.: H04L 29/06, H04L 12/26

(54) **DETECTION AND MITIGATION OF NETWORK COMPONENT DISTRESS**
ERKENNUNG UND EINDÄMMUNG VON NETZWERKKOMPONENTENPROBLEMEN
DÉTECTION ET ATTÉNUATION DE DÉTRESSE D'UN COMPOSANT DE RÉSEAU

(30) Priority: 02.03.2015 US 201562127234 P; 08.04.2015 US 201514682097
(43) Date of publication of application: 07.09.2016
(73) Proprietor: Lookingglass Cyber Solutions, Inc., Reston, VA 20191 (US)
(72) Inventor: DONOVAN, Christopher, San Jose, CA 95112 (US); LYNCH, Patrick, San Jose, CA 95129 (US); ROBERTS, Kenneth, Portola Valley, CA 94028 (US); BEINE, Todd, Saratoga, CA 95070 (US)
(74) Representative: Boult Wade Tennant LLP

(56) References cited:
- US-A1- 2004 054 925
- US-A1- 2005 259 645
- US-A1- 2008 028 467
- US-A1- 2009 262 741

## Description

### CROSS-REFERENCE TO RELATED APPLICATIONS

### BACKGROUND

The Internet is growing by leaps and bounds. Everyday, more and more users log on to the Internet for the first time, and the new users and existing users are finding more and more content being made available to them. The Internet has become a universal medium for communications, commerce and information gathering.

Unfortunately, the growing user base along with the growing content provider base is causing ever increasing congestion and strain on the Internet infrastructure, the network hardware and software plus the communications links that link everything together. While the acronym "WWW" is defined as "World Wide Web", many users of the Internet have come to refer to it as the "World Wide Wait."

These problems are not limited to the Internet either. Many companies provide internal networks, known as intranets, which are essentially private Internets for use by employees of the companies. These intranets may become overloaded as well (e.g., when the intranet also provides connectivity to the Internet). In this situation, the intranet is not only carrying internally generated traffic (e.g., generated by an employee or an internal application) but also Internet traffic generated externally (e.g., by the employees, an external application, or other users).

The growth of the Internet has also resulted in more and more malicious programmer activity. These "hackers" spread virus programs or attempt to hack into Web sites in order to steal valuable information such as credit card numbers. Further, there have been an increasing number of "Denial of Service" (DOS) attacks where, for example, a hacker infiltrates multiple innocent computers connected to the Internet (e.g., bots) and coordinates these innocent computers, without knowledge of the owners, to bombard a particular Web site with an immense volume of traffic. This flood of traffic overwhelms the target's servers and literally shuts the Web site down. Additionally, the traffic may overwhelm parts of the Internet near the target site.

DOS attacks may be aimed at different types of services available on a network including, for example, DNS, HTTP (e.g., web traffic), encryption, time services, streaming services, VoIP. DOS attacks may be aimed at vulnerable corporate services such as, for example, DNS that translates Internet names to addresses. DOS attacks come in mainly two varieties. One attempts to shut down the DNS system specifically in relation to the target site so that no legitimate user can obtain a valid translation and make a request from that site, such as by altering the operation of the DNS server to provide an invalid translation. Another type of DOS attack attempts to overload a DNS server directly with a flood of content requests that exceeds the capacity of the server, thereby preventing access to all sites whose address translations are dependent thereon.

US2009262741 (A1) discloses a method and system according to the preamble of the independent claims.

US2005259645 (A1) discloses a method and system for thwarting denial of service attacks originating in a DOCSIS-compliant cable network (DCN). A DCN comprises one or more sub-networks each comprising an access network, one or more cable modem termination systems (CMTSs) and one or more cable modems (CMs). The DCN also accesses an edge server and a local DNS cache server. The DCN interfaces with the Internet and accesses a remote DNS server according to well-known protocols. The CMTS is adapted to compare the source IP address included in IP packet headers to the IP address of the customer premises equipment (CPE) from which the IP packet originates as assigned by the DNS. Data packets that have spoofed addresses are either deleted or quarantined. Packets reaching the edge server are evaluated by an attack detection system. A packet determined to be part of a denial of service attack is inspected and the source IP address and the destination IP address extracted. A cache controller is instructed to prevent a DNS cache server from responding to a domain name request containing both the extracted source IP address and destination IP address.

### SUMMARY

The present invention is defined by the following claims, and nothing in this section should be taken as a limitation on those claims.

In a first aspect, a method of transparently interfacing to a network is provided. The network carries a plurality of packets. Each packet of the plurality of packets is transmitted, via the network, between one of at least one source and at least one intended destination intended by the one of the at least one source. The method includes interfacing with the network between each of the at least one source and each of the at least one intended destination so as to be able to intercept any packet of the plurality of packets transmitted there between. The method also includes intercepting each of at least a subset of packets of the plurality of packets at the interfacing. The method includes determining, for each intercepted packet, whether the intercepted packet is transmitted from one of the at least one source to one of the at least one intended destination or is transmitted from one of the at least one intended destination to one of the at least one source. A processor accounts, for each of the at least one intended destination, each intercepted packet transmitted thereto or receiver therefrom based on the determining. An action is taken based on the accounting.

In a second aspect, a system for transparently interfacing to a network is provided. The network carries a plurality of packets. Each packet of the plurality of packets is transmitted, via the network, between at least one source and at least one intended destination intended by the at least one source. The system includes a system network interface operative to interface with the network between each of the at least one source and each of the at least one intended destination so as to be able to intercept any packet of the plurality of packets transmitted therebetween. The system also includes a packet interceptor coupled with the system network interface and operative to intercept each of at least a subset of packets of the plurality of packets at the interfacing. The system includes a processor coupled with the packet interceptor and operative to determine, for each intercepted packet, whether the intercepted packet is transmitted from one of the at least one source to one of the at least one destination or is transmitted from one of the at least one intended destination to one of the at least one source. The processor is further operative to account, for each of the at least one intended destination, each intercepted packet transmitted thereto or received therefrom based on the determination. The processor is operative to take action based on the account.

In a third aspect, a non-transitory computer-readable storage medium that stores instructions executable by one or more processors to prevent overload of a source include in a network is provided. The network carries a plurality of packets. Each packet of the plurality of packets is transmitted, via the network, between at least one source and at least one intended destination intended by the at least one source. The instructions include interfacing with the network between each of the at least one source and each of the at least one intended destination so as to be able to intercept any packet of the plurality of packets transmitted therebetween. The instructions further include intercepting each of at least a subset of packets of the plurality of packets at the interfacing. The instructions include determining, for each intercepted packet, whether the intercepted packet is transmitted from one of the at least one source to one of the at least one intended destination or is transmitted from one of the at least one intended destination to one of the at least one source. The instructions further include accounting, for each of the at least one intended destination, each intercepted packet transmitted thereto or received therefrom based on the determining. The instructions include taking an action based on the accounting.

### BRIEF DESCRIPTION OF THE DRAWINGS

FIG. 1 shows an exemplary network for use with the disclosed embodiments;
FIG. 2 shows an embodiment of a sub-network of the network of FIG. 1;
FIG. 3 shows a flowchart of one embodiment of a method to prevent overload of a source included in a network; and
FIG. 4 is an exemplary state diagram illustrating the method of FIG. 3.

### DETAILED DESCRIPTION OF THE DRAWINGS

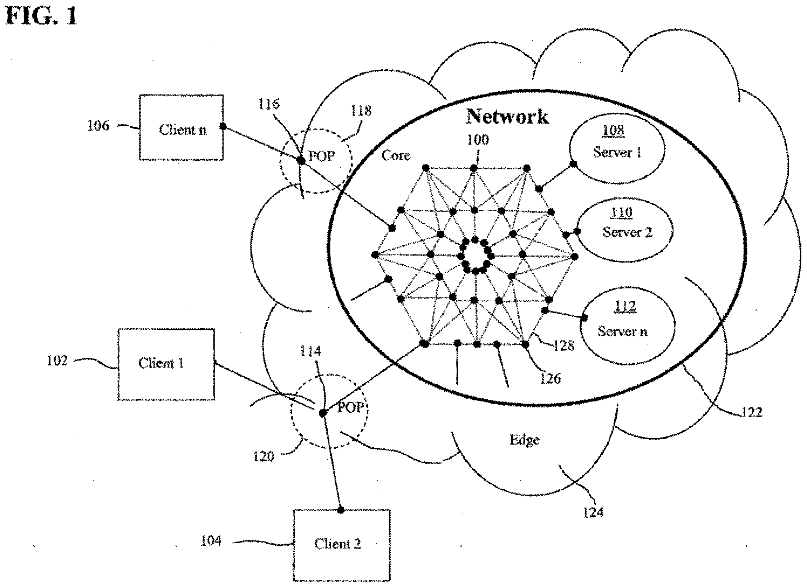

FIG. 1 shows an exemplary network 100 for use with the disclosed embodiments. In one embodiment, the network 100 is a publicly accessible network, and in particular, the Internet. While, for the purposes of this disclosure, the disclosed embodiments will be described in relation to the Internet, one of ordinary skill in the art will appreciate that the disclosed embodiments are not limited to the Internet and are applicable to other types of public networks as well as private networks, and combinations thereof, and all such networks are contemplated.

As an introduction, a network interconnects one or more computers so that the one or more computers may communicate with one another, whether the one or more computers are in the same room or building (such as a Local Area Network or LAN) or across the country from each other (such as a Wide Area Network or WAN). A network is a series of points or nodes 126 interconnected by communications paths 128. Networks may interconnect with other networks and may contain sub-networks. A node 126 is a connection point, either a redistribution point or an end point, for data transmissions generated between the computers that are connected to the network. In general, a node 126 has a programmed or engineered capability to recognize and process or forward transmissions to other nodes 126. The nodes 126 may be computer workstations, servers, bridges, routers, switches, or other devices.

A router is a device or, in some cases, software in a computer, that determines the next network node 126 to which a piece of data (also referred to as a "packet" in the Internet context) is to be forwarded toward a destination of the packet. The router is connected to at least two networks or sub-networks and decides which way to send each information packet based on a current understanding of the state of the networks to which the router is connected. A router is located at any juncture of two networks, sub-networks or gateways, including each Internet point-of-presence (described in more detail below). A router may be included as part of a network switch. A router may create or maintain a table of the available routes and conditions and uses this information along with distance and cost algorithms to determine the best route for a given packet. A packet may travel through a number of network points, each containing additional routers, before arriving at the destination. A router may also provide media translation (e.g., from wireless to DSL, from DSL to Ethernet, or from optical to copper).

The communications paths 128 of the network 100, such as the Internet, may be coaxial cable, fiber optic cable, telephone cable, leased telephone lines such as T1 lines, satellite links, microwave links or other communications technology as is known in the art. The hardware and software that allows the network to function is known as the "infrastructure." A network 100 may also be characterized by the type of data the network 100 carries (e.g., voice, data, or both) or by the network protocol used to facilitate communications over the physical infrastructure of the network 100.

The Internet, for example, is a publicly accessible worldwide network 100 that primarily uses the Transport Control Protocol and Internet Protocol ("TCP/IP") family of protocols to permit the exchange of information. At a higher level, the Internet supports several applications protocols including the Hypertext Transfer Protocol ("HTTP") for facilitating the exchange of HTML/World Wide Web ("WWW") content, File Transfer Protocol ("FTP") for the exchange of data files, electronic mail exchange protocols, Telnet for remote computer access, and Usenet ("NNTP" or Network News Transfer Protocol) for the collaborative sharing and distribution of information. The disclosed embodiments are applicable to many different applications protocols both now and later developed.

Concepts that are part of HTTP include the idea that files/content may contain references to other files/content whose selection will elicit additional transfer requests. Any Web server 108, 110, 112 contains, in addition to the files the Web server can serve, an HTTP daemon, a program that is designed to wait for HTTP requests and handle the HTTP requests when the HTTP requests arrive. A personal computer Web browser program, such as Microsoft™ Internet Explorer, is an HTTP client program (e.g., a program that runs on the client 102, 104, 106), sending requests to Web servers 108, 110, 112. When the browser user enters file requests by either "opening" a Web file (e.g., typing in a Uniform Resource Locator or URL) or clicking on a hypertext link, the browser builds an HTTP request and sends the HTTP request to the Web server 108, 110, 112 indicated by the URL. The HTTP daemon in the destination server 108, 110, 112 receives the request and, after any necessary processing, returns the requested file to the client 102, 104, 106.

The Web content that a Web server typically serves is in the form of Web pages that consist primarily of Hypertext Markup Language. Hypertext Markup Language ("HTML") is the set of "markup" symbols or codes inserted in a file intended for display on a World Wide Web browser. The markup tells the Web browser how to display a Web page's words and images, as well as other content, for the user. The individual markup codes are referred to as elements or tags. Web pages may further include references to other files that are stored separately from the HTML code, such as image or other multimedia files to be displayed in conjunction with the HTML Web content. The HTML may also reference style sheets, which provide more information on how to display content. Style sheets are themselves content on the World Wide Web.

A Web site is a related collection of Web files/pages that may include a beginning HTML file called a home page. The home page provides links to other web files/pages in the collection and/or to other Web sites. Each Web file/page of the Web site may be identified by its own Uniform Resource Locator ("URL") to which those links refer and/or which may be used to directly access that file/page. Typically, but not always, the URL's identifying the pages/files of the Web site will include a common base domain name for which the Domain Name System ("DNS") will maintain an address translation record. A company or an individual tells someone how to get to their Web site by giving that person the address or domain name of their home page (the addressing scheme of the Internet and the TCP/IP protocol is described in more detail below). From the home page, links may be provided to all the other pages (e.g., HTML files) located on their site. For example, the Web site for IBM™ has the home page address of http://www.ibm.com. The parts of the name after the slashes map to directories and files on a server, while the parts of the name before the slashes reference a machine. Alternatively, the home page address may include a specific file name like index.html, but, as in IBM's case, when a standard default name is set up, users do not have to enter the file name. IBM's home page address leads to thousands of pages, but a Web site may also be just a few pages.

To expand on the example of the home page address of http://www.ibm.com, "ibm.com" is the domain, and "www.ibm.com" is a host name. "www" maps to an IP address for Web services. Alternatively, "ftp.ibm.com" would map, via DNS, to an FTP service that is running on a host, and "support.ibm.com" would map, via DNS, to a Web server, an FTP server, or something else. Names are not limited to three parts (e.g., VoIP have more than ten parts). Everything to the left of the first slash maps to one or more IP addresses, and everything to the right of the last slash maps to a file on that system.

Since site implies a geographic place, a Web site may be confused with a Web server 108, 110, 112. As discussed above, a server 108, 110, 112 is a computer that holds and serves the HTML files, images and other data for one or more Web sites. A very large Web site may be spread over a number of servers 108, 110, 112 in different geographic locations, or one server 108, 110, 112 may support many Web sites. For example, a Web hosting company may provide server 108, 110, 112 facilities to a number of Web sites for a fee. Multiple Web sites may cross-link to files on other Web sites or even share the same files.

Logically, the Internet can be thought of as a web of intermediate network nodes 126 and communications paths 128 interconnecting the network nodes 126 that provide multiple data transmission routes from any given point to any other given point on the network 100 (e.g., between any two computers connected to the network 100), or as the connecting fabric for millions of small networks. Physically, the Internet can also be thought of as a collection of interconnected sub-networks, where each sub-network contains a portion of the intermediate network nodes 126 and communications paths 128. The division of the Internet into sub-networks is typically geographically based, but may also be based on other factors such as resource limitations and resource demands. For example, a particular city may be serviced by one or more Internet sub-networks provided and maintained by competing Internet Service Providers ("ISPs") (discussed in more detail below) to support the service and bandwidth demands of the residents. The Internet includes tier 1 ISPs run by companies and/or governments to connect intranets.

An intranet is a private network contained within an enterprise, such as a corporation, which uses the TCP/IP and other Internet protocols, such as the World Wide Web, to facilitate communications and enhance the business concern. An intranet may contain its own Domain Name Server ("DNS") and may be connected to the Internet via a gateway (e.g., an intra-network connection, or gateway in combination with a proxy server or firewall, as are known in the art).

Referring back to FIG. 1, clients 102, 104, 106 and servers 108, 110, 112 are shown coupled with the network 100. Herein, the phrase "coupled with" is defined as directly connected to or indirectly connected with, through one or more intermediate components. Such intermediate components may include both hardware and software based components. The network 100 facilitates communications and interaction between one or more of the clients 102, 104, 106 and one or more of the servers 108, 110, 112 (described in more detail below). Alternatively, the network 100 also facilitates communications and interaction among one or more of the clients 102, 104, 106 (e.g., between one client 102, 104, 106 and another client 102, 104, 106 or among one or more of the servers 108, 110, 112, between one server 108, 110, 112 and another server 108, 110, 112).

A client 102, 104, 106 may include a personal computer workstation, mobile or otherwise, a wireless device such as a personal digital assistant or cellular telephone, a smart device such as, for example, a refrigerator or a garage door opener, another device operable to connect via a medium, an enterprise scale computing platform such as a mainframe computer or server, or may include an entire intranet or other private network that is coupled with the network 100. Typically, a client 102, 104, 106 initiates data interchanges with other computers, such as servers 108, 110, 112 coupled with the network 100. These data interchanges may involve the client requesting data or content from the other computer and the other computer providing that data or content in response to the request. Alternatively, the other computer coupled with the network may "push" data or content to the client 102, 104, 106 without the data first being requested. For example, an electronic mail server 108, 110, 112 may automatically push newly received electronic mail over the network 100 to the client 102, 104, 106 as the new electronic mail arrives, alleviating the client 102, 104, 106 from first requesting that new mail be sent. There may be many clients 102, 104, 106 coupled with the network 100.

A server 108, 110, 112 may include a personal computer workstation, an enterprise scale computing platform or other computer system as are known in the art. A server 108, 110, 112 may respond to requests from clients 102, 104, 106 over the network 100. In response to the request, the server 108, 110, 112 provides the requested data or content to the client 102, 104, 106, which may or may not require some sort of processing by the server 108, 110, 112 or another computer to produce the requested response. A client 102, 104, 106 may also be a server 108, 110, 112, and vice versa, depending upon the nature of the data interchange taking place (e.g., peer-to-peer architectures). During any given communication exchange via the network 100, or a portion thereof, a client 102, 104, 106 requests or receives content and is separate from the server 108, 110, 112 that provides the content (e.g., whether requested or not; pushed). Servers 108, 110, 112 may be World Wide Web servers serving Web pages and/or Web content to the clients 102, 104, 106 (described in more detail below). There may be many servers 108, 110, 112 coupled with the network 100.

Clients 102, 104, 106 are each coupled with the network 100 at a point of presence ("POP") 114, 116. The POP 114, 116 is the connecting point that separates the client 102, 104, 106 from the network 100. In a public network 100 such as the Internet, the POP 114, 116 is the logical (and possibly physical) point where the public network 100 ends, after which comes the private (e.g., leased or owned) hardware or private (e.g., leased or owned) network of the client 102, 104, 106. A POP 114, 116 may be provided by a service provider 118, 120, such as an Internet Service Provider ("ISP") 118, 120 that provides connectivity to the network 100 on a fee for service basis. A POP 114, 116 may actually reside in rented space owned by telecommunications carrier such as AT&T or Sprint to which the ISP 118, 120 is connected. A POP 114, 116 may be coupled with routers, digital/analog call aggregators, servers 108, 110, 112, frame relay, and/or ATM switches. As will be discussed below, a POP 114, 116 may also contain cache servers and other content delivery devices.

A typical ISP 118, 120 may provide multiple POP's 114, 116 to simultaneously support many different clients 102, 104, 106 connecting with the network 100 at any given time and/or to provide geographic oriented access (e.g., Japan vs. New York). A POP 114, 116 may be implemented as a piece of hardware such as a modem or router but may also include software and/or other hardware such as computer hardware to couple the client 102, 104, 106 with the network 100 both physically/electrically and logically (as will be discussed below). The client 102, 104, 106 connects to the POP 114,116 over a telephone line or other transient or dedicated connection. For example, where a client 102, 104, 106 is a personal computer workstation with a modem, the ISP 118, 120 provides a modem as the POP 114, 116 to which the client 102, 104, 106 may connect to via a standard telephone line, DSL, a local area network ("LAN"), a wireless network, etc. Where the client 102, 104, 106 is a private intranet, the POP 114, 116 may include a gateway router that is connected to an internal gateway router within the client 102, 104, 106 by a high speed dedicated communication link such as T1 line, DS1, DS3, or a dedicated fiber optic cable.

A service provider 118, 120 may provide POP's 114, 116 that are geographically proximate to the clients 102, 104, 106 being serviced. For dial up clients 102, 104, 106, the telephone calls may be local calls. For any client 102, 104, 106, a POP that is geographically proximate may result in a faster and more reliable connection with the network 100. Servers 108, 110, 112 are also connected to the network 100 by POP's 114, 116. These POP's 114, 116 may provide a dedicated, higher capacity and more reliable connection to facilitate the data transfer and availability needs of the server 108, 110, 112. Where a client 102, 104, 106 is a wireless device, the service provider 118, 120 may provide many geographically dispersed POP's 114, 116 to facilitate connecting with the network 100 from wherever the client 102, 104, 106 may roam. Alternatively, the service provider 118, 120 may have agreements with other service providers 118, 120 to allow access by each other's customers. Each service provider 118, 120, along with corresponding POP's 114, 116, and the clients 102, 104, 106 effectively form a sub-network of the network 100.

The network 100 may be further logically described to include a core 122 and an edge 124. The core 122 of the network 100 includes the servers 108, 110, 112 and the bulk of the network 100 infrastructure, as described above, including larger upstream service providers 118, 120, and backbone communications links, etc. Effectively, the core 122 includes everything within the network 100 up to the POP's 114, 116. The POP's 114, 116 and associated hardware lie at the edge 124 of the network 100. The edge 124 of the network 100 is the point where clients 102, 104, 106, whether single devices, computer workstations or entire corporate internal networks, couple with the network 100. As defined herein, the edge 124 of the network 100 may include additional hardware and software such as firewalls, Domain Name Servers, cache servers, proxy servers and reverse proxy servers as will be described in more detail below. As the network 100 spreads out from the core 122 to the edge 124, the total available bandwidth of the network 100 may be distributed over more and more lower cost and lower bandwidth communications paths. At the core 122, bandwidth over the higher capacity backbone interconnections tends to be more costly than bandwidth at the edge 124 of the network 100. As with all economies of scale, high bandwidth interconnections may be more difficult to implement and therefore may be rarer and more expensive than low bandwidth connections. It will be appreciated, that even as technology progresses, newer and higher bandwidth technologies may remain more costly than relatively lower bandwidth technologies.

Packets flowing through the network may be intercepted and according to one or more of the present embodiments, analyzed to detect whether or not one or more components of the network 100 are in distress and/or protect the one or more components from being overloaded. Interception of packets off the network and subsequent processing thereof to determine a course of action to be taken with the intercepted packets is described in more detail below and in U.S. Pat. No. 8,204,082, and U.S. Pat. No. 9,258.241 , which are hereby incorporated by reference in their entirety. This may include selective interception of packets, selective modification of those intercepted packets and the subsequent release/reinsertion of the packets, modified or unmodified, and/or release of new packets, back into the general stream of network traffic. Selective interception includes the temporary interception of all packets presented on the inputs of the edge device and performing an initial evaluation to determine whether the packet should be immediately released, held/intercepted for further processing, or deleted/dropped. The determination of whether or not a particular packet should be held/intercepted and the further processing/modification and/or subsequent release of the temporarily held packet are discussed in more detail below. Other methods of evaluating packets for possible interception that utilize mechanisms other than temporarily buffering packets, in whole or in part, for the purpose of the evaluation, such as applying pattern matching as the packet moves through the packet processor, etc., and all such mechanisms may be used.

The embodiments disclosed herein may be implemented by coupling, logically and/or physically, an edge server or similar device, such as the CloudShield CS-4000 DPPM or IBM BladeCenter having a CloudShield DPI or PN 41 blade, as will be described in more detail below, with the routing equipment of a telecommunications carrier and/or Internet service provider, at either the edge or core of the network as described herein. Coupling at the edge may facilitate packet interception at a point as close to the POP's as possible or otherwise at a point where services, described in more detail below, may be provisioned. This allows for early and reliable packet interception and further provides some measure of reliability in determining the destination and/or origination of a particular packet. Alternatively, the interception of packets may also take place at other upstream locations. The optimal logical and/or physical placement of the disclosed embodiments (e.g., at the edge, the core or any point in between) is at any point within the network traffic flow that is most likely to see all of the relevant packets, as described below, that are to be intercepted flow through.

In addition to the above embodiments, many other solutions to the problems of the Internet may involve the use of such edge devices to provide services that process, route and/or deliver packets. Examples of such services include switching, server load balancing, DNS enhancement, quality of service enhancement, and content delivery enhancement such as caching and mirroring applications. Other examples include application specific devices that provide particular services such as intrusion protection devices (e.g., the IBM ISS Preventia appliance manufactured by IBM Corporation, firewall devices, the Checkpoint Firewall-1 manufactured by Check Point Software Technologies, Inc., located in Redwood City, Calif., anomaly or Distributed Denial of Service detection appliances such as devices manufactured by Arbor Networks, Inc., located in Lexington, Mass., or virus protection appliances). Exemplary devices are the CS-2000 Deep Packet Processing Module ("DPPM") and the CS-4000, manufactured by CloudShield Technologies, Inc., located in Sunnyvale, California (and described in more detail above), which are general purpose selective packet interception devices that, in one application, may also intercept DNS requests but performs the interception selectively by analyzing the application data layer of the packets in addition to the header data layer. Any portion of the packet may be analyzed. Packets may be intercepted as the packets flow over the network prior to receipt by the intended destination of the packet (e.g., the destination to which the packets are addressed), the packet contents may be processed to determine a course of action, and the course of action may be taken, as was described.

As described above, in many Internet enhancement applications, packets may be intercepted and processed close to the source before the packets enter the general stream of Internet traffic and diverge or alternatively, at one or more "choke points" through which all of the relevant packets are to flow, such as a service provisioning point (e.g., an intermediate DNS server).

In order to intercept a packet flowing from one point to another, an intercepting device is to be logically and/or physically installed in series with the packet flow so that all packets of interest flow through the device. The intercepting device then intercepts the packets as the packets flow from point to point and determines what actions to be taken with the packets.

Edge devices may perform the basic functions of intercepting packets from the general flow of network traffic, processing the intercepted packets and potentially releasing the original packets and/or reinserting new or modified packets back into the general flow of network traffic. In general, it is the choice of which packets to intercept and the subsequent processing performed by each edge/packet intercepting device on the intercepted packets (e.g., the application) that distinguishes each device. An example of such an edge device is described in more detail in U.S. Pat. No. 9,537,824, which is hereby incorporated by reference in its entirety. The implementation provides a resilient, scalable framework to add new services via a software provisioning event (e.g., transparently without requiring reconfiguration of the providers physical or logical infrastructure), while also enabling customer based provisioning to have a dynamic impact on either a per customer and/or per device service delivery basis. From a transport perspective the system may be transparent on both ends, the service provider infrastructure as well as to the application servers providing the services. This allows a service provider to insert the chassis, or cluster of chassis', into the network without impacting the delivery structure as if the services were transparent or not even present. Application servers are further able to leverage existing products in their native form without modification.

The edge device may be a CloudShield Deep Packet Inspection (DPI) blade a CloudShield PN41 blade, or another device. The edge device acts as a network processing line card and together or separately as a deep packet inspection content processing blade. These blades look at all traffic that arrives at the chassis, determine which packets are for customers or services within the chassis and which packets are for other systems. The DPI blade provides multi-gigabit, multi-function, programmable, deep packet inspection. Inspecting, processing, and modifying packet contents at high speeds without noticeable latency provide capabilities for handling application layer threats, and the text-based protocols of Voice, Video and Data services. Coupled with packet operations scripting language, the DPI blade enables network operators to deploy traffic treatment algorithms of their own design, allowing the network operators to differentiate service offerings, or develop classified solutions for protecting national infrastructures. These capabilities further enable content monitoring and control, and security applications to be performed on even small packet sizes, and enable entirely new classes of applications and services.

Application software may be loaded onto blades servers such that the blade servers may operate as application servers that provide revenue bearing services on behalf of a service provider's customer, such as antivirus services, anti-spam services, intrusion protection services, etc. This software may be of an enterprise application type that takes over an entire blade and has no notion of customers, or may be one that stores a different policy per customer. In some cases this software may be transparently bridging network interfaces of the blade server while other software may act as gateways or responding targets on a single interface. Exemplary applications of the disclosed embodiments include DNS server protection, such as DNS Defender provided by CloudShield Technologies, Inc., San Jose, Calif.

Regarding DNS Defender, Domain Name Service (DNS) may be considered the digital glue of the different technologies that form the Internet. Unfortunately, DNS servers have become a weak link of the global Internet as everything from web surfing to making a digital call depends upon it. At the same time, DNS is one of the oldest, most "trusting" protocols deployed in use today. The CloudShield DNS Defender™ product is an example of a firewall specialized around DNS that may be used with the disclosed embodiments as a standalone device (e.g., blade) or as an application executing on one of the devices identified above (e.g., the Cloudshield CS-2000 or CS-4000). As service providers work on scaling and protecting DNS infrastructure, multiple routers, firewalls, load balancers, and a farm of servers may be involved. However, these defenses cannot protect the DNS servers from malicious flood attacks that use "good" DNS transactions.

DNS Defender may be implemented using a single higher performance blade performing content processing within a BladeCenter cabinet. DNS Defender protects DNS servers from attacks while accelerating performance. Malicious or errant traffic is detected and discarded while valid DNS requests are passed through for processing. DNS Defender accelerates DNS lookups by "caching" DNS server responses. Service providers and web hosting companies may significantly reduce operational costs because DNS Defender eliminates the need for firewalls, load balancers and the majority of the DNS servers and the associated power and management costs. Since there are fewer systems, there is capital expenditure (CAPEX) savings as well. To perform this operation, the payload of every request may be processed and at times even responded to by the CloudShield blade on behalf of the DNS server.

Generally DNS operates as follows. As was described above, the network 100 facilitates communications between clients 102, 104, 106 and servers 108, 110, 112. More specifically, the network 100 facilitates the transmission of HTTP requests from a client 102, 104, 106 to a server 108, 110, 112 and the transmission of the response of the server 108, 110, 112 to that request (e.g., the requested content) back to the client 102, 104, 106. In order to accomplish this, each device coupled with the network 100, whether it be a client 102, 104, 106 or a server 108, 110, 112, provides a unique identifier so that communications may be routed to the correct destination. On the Internet, the unique identifier may include an Internet Protocol ("IP") address, which may be expressed as a series of numbers. Users, however, may work better with names. The unique identifier may also include domain names (e.g., including World Wide Web Uniform Resource Locators or "URL's"). The full domain name, as a name, may be unique, but the domain name may not map to a unique IP address. The domain name may map to multiple IP addresses (e.g., www.ibm.com maps to a number of addresses). Every client 102, 104, 106 and every server 108, 110, 112 has (or in some circumstances may share) a unique IP address so that the network 100 may reliably route communications to the client 102, 104, 106 or server 108, 110, 112. Additionally, clients 102, 104, 106 and servers 108, 110, 112 may be coupled with proxy servers (e.g., forward, reverse or transparent), discussed in more detail below, which allow multiple clients 102, 104, 106 or multiple servers 108, 110, 112 to be associated with a single domain name or a single IP address. In addition, a particular server 108, 110, 112 may be associated with multiple domain names and/or IP addresses for more efficient handling of requests or to handle multiple content providers (e.g., multiple Web sites) on the same server 108, 110, 112. Further, as was discussed above, since a POP 114, 116 provides the connecting point for any particular client 102, 104, 106 to connect to the network 100, it is often satisfactory to provide each POP 114, 116 with a unique domain name and IP address since the POP 114, 116 will reliably deliver any received communications to a connected client 102, 104, 106. Where the client 102, 104, 106 is a private network, the client 102, 104, 106 may have its own internal hardware, software and addressing scheme (which may also include domain names and IP addresses) to reliably deliver data received from the POP 114, 116 to the ultimate destination within the private network client 102, 104, 106.

As was discussed, the Internet is a collection of interconnected sub-networks where users/devices communicate with each other. Each communication carries the address of the source and destination sub-networks and the particular machine, or proxy therefore, within the sub-network associated with the user or host computer at each end.

This address is called the IP address (Internet Protocol address). In the current implementation of the Internet, there are two types of Internet Protocol addressing schemes. One type, IPv4, is a 32 bit binary number often represented as four 8 bit octets. The second addressing scheme is IPv6, which is a 128 bit binary number. A client or a server may have an IP address of one type (e.g., IPv4 or IPv6) or both types (e.g., IPv4 and IPv6), and potentially multiple addresses of each type. This 32-bit IP address, for example, has two parts: one part (e.g., the most significant 24 bits) identifies the source or destination sub-network (e.g., with the network number), and the other part (e.g., the least significant 8 bits) identifies the specific machine or host within the source or destination sub-network (e.g., with the host number). An organization may use some of the bits in the machine or host part of the address to identify a specific sub-network within the sub-network.

One problem with IP addresses is that IP addresses have very little meaning to ordinary users/human beings. In order to provide an easier to use, more user friendly network 100, a symbolic addressing scheme operates in parallel with the IP addressing scheme. Under this symbolic addressing scheme, each client that, for example, includes a server or provides a service (e.g., server 108, 110, 112) is also given a "domain name", and further, individual resources, content or data are given a Uniform Resource Locator ("URL") based on the domain name of the server 108, 110, 112 on which the individual resources, content or data are stored. Domain names and URL's are human comprehensible text and/or numeric strings that have symbolic meaning to the user. For example, a company may have a domain name for its servers 108, 110, 112 that is the company name (e.g., IBM Corporation's domain name is ibm.com). Domain names are further used to identify the type of organization to which the domain name belongs. These are called "top-level" domain names and include com, edu, org, mil, gov, etc. Com indicates a corporate entity, edu indicates an educational institution, mil indicates a military entity, and gov indicates a government entity. It will be apparent to one of ordinary skill in the art that the text strings that make up domain names may be arbitrary and that the text strings are designed to have relevant symbolic meaning to the users of the network 100. A URL may include the domain name of the provider of the identified resource, an indicator of the type of resource, and an identifier of the resource itself. For example, for the URL "http://www.ibm.com/index.html", http identifies this resource as a hypertext transfer protocol compatible resource, www.ibm.com is the domain name (again, the www is arbitrary and typically is added to indicate to a user that the server 108, 110, 112 associated with this domain name is a world wide Web server), and index.html identifies a hypertext markup language file named "index.html" that is stored on the identified server 108, 110, 112.

Domain names make the network 100 easier for human beings to utilize the network 100. However, the network infrastructure ultimately uses IP addresses and not domain names to route data to the correct destination. Therefore, a translation system is provided by the network 100 to translate the symbolic human comprehensible domain names into IP addresses that may then be used to route the communications. The Domain Name Service ("DNS") is the way that Internet domain names are located and translated into IP addresses. The DNS infrastructure is a distributed translation system of address translators with a primary function of translating domain names into IP addresses and vice versa. These address translators, also referred to as DNS servers, may include Recursive DNS servers ("R-DNS" servers) and Authoritative DNS Servers ("A-DNS" servers), described in more detail below. R-DNS servers are the part of the DNS infrastructure that provides the required information to web clients (e.g., forward requests). R-DNS Servers may be managed by ISPs or the organizations that own the domain from which the connection is being made - a company, for example, although there are some popular public recursive DNS servers run by big corporations like Google and other organizations. A-DNS servers "know" and are the authority for the mapping of URL to IP for a domain or a portion of a domain. A-DNS servers are the source of the information that the recursive DNS servers send to web clients like browsers. Authoritative DNS servers for a website may be provided by web hosting companies or specialist DNS hosting companies. Associated with every domain (e.g., IBM.com) are authoritative DNS servers. Generally, R-DNS servers forward requests for translations to one or more A-DNS servers when the R-DNS servers do not already have the translation validly cached. In order to find an A-DNS server that has the requisite translation, the R-DNS server refers to known root servers and top level domains (TLD) that refer to the appropriate A-DNS server (e.g., .mil, .com, .edu). If an A-DNS sever does not know what the translated address is for a given request, the A-DNS server may respond as such but will generally not forward the request on to another A-DNS server unless the A-DNS server is already acting as an R-DNS server.

Due to the ever expanding number of potential clients 102, 104, 106 and servers 108, 110, 112 coupled with the network 100 (e.g., currently numbering in the tens of millions), maintaining a central list of domain name/IP address correspondences would be impractical. Therefore, the lists of domain names and corresponding IP addresses are distributed throughout the Internet in a hierarchy of authority. A DNS server, typically located within close geographic proximity to a service provider 118, 120 (and likely provided by that service provider 118, 120), handles requests to translate the domain names serviced by that service provider 118, 120.

DNS translations (e.g., "lookups" or "resolutions") may be forward or reverse. Forward DNS translation uses an Internet domain name to find an IP address. Reverse DNS translation uses an Internet IP address to find a domain name. When a user enters the name or URL for a Web site or other resource into a browser program, the domain name is transmitted to a DNS server (defined for the client) that does a forward DNS translation in a table to locate the IP address. Forward DNS translations are the more common translation since most users think in terms of domain names rather than IP addresses. However, occasionally, a user may see a Web page with a URL in which the domain name part is expressed as an IP address (e.g., a dot address) and wants to be able to see a corresponding domain name to, for example, attempt to figure the identity of who is providing the particular resource. To accomplish this, the user would perform a reverse DNS translation. Additionally, reverse lookups are used to provide that the content is coming from a known, trusted place.

The DNS translation servers provided on the Internet form a hierarchy through which any domain name may be "resolved" into an IP address. If a particular recursive DNS translation server does not "know" the corresponding IP address of a given domain name, the recursive DNS translation server "knows" other DNS translation servers (e.g., A-DNS servers) in the hierarchy that the recursive DNS translation server may "ask" to get the translation.

This hierarchy includes "top-level" DNS translation servers (e.g., com, gov, edu, etc., as described above). This hierarchy further continues all the way up to the actual resource (e.g., client 102, 104, 106 or server 108, 110, 112), which is typically affiliated with a DNS translation server that "knows" about the resource and the IP address of the resource. A particular DNS translation server "knows" of a translation when the translation exists in a table of translations of the DNS translation server and has not expired. Any particular translation may be associated with a Time to Live ("TTL"), which specifies a duration, time or date after which the translation expires. As discussed, for a given translation, if a DNS translation server does not know the translation because the translation is not in the routing table of the DNS translation server or the translation has expired, that DNS translation server will have to inquire up the hierarchical chain of DNS translation servers in order to make the translation. In this way, new domain name and IP address translations may be propagated through the DNS translation server hierarchy as resources are added, removed, or changed, and old resources are assigned new addresses.

For example, root servers are at well known IP addresses. Root servers know the addresses of the top level domains (e.g., .edu, .com, .biz, .mil, etc.). The "top-level" domains know the address of the authoritative servers within that domain. The authoritative DNS server for .com knows where the authoritative server is for IBM.com, for example. For example, the IBM authoritative server (e.g., NS1.IBM.com) knows the IP address of www.IBM.com. If a recursive DNS server does not know the address of a domain, the recursive DNS server will look the address of the domain up by traversing a tree until the recursive DNS server finds the IP address.

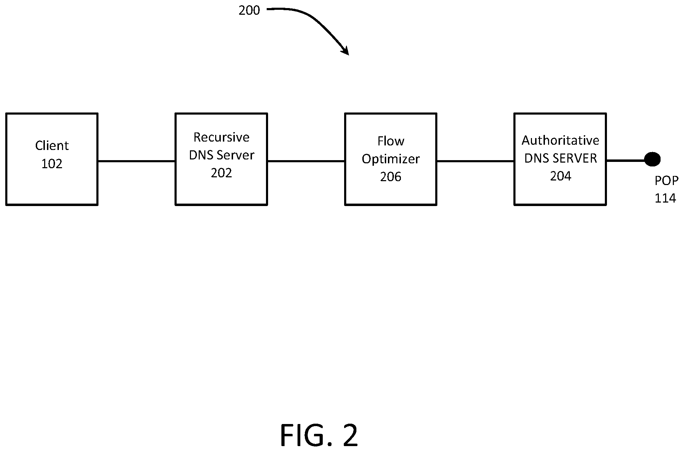

FIG. 2 shows one embodiment of a sub-network 200 of the network 100 of FIG. 1. In the embodiment shown in FIG. 2, the sub-network 200 is a local network, which is a collection of systems connected to a network under a common administrative domain.

The sub-network 200 includes, for example, the client 102 and the POP 114 from FIG. 1, and at least one recursive DNS server 202 (e.g., a first DNS server), at least one authoritative DNS server 204 (e.g., a second DNS server), and a flow optimizer 206. The sub-network 200 may be coupled to other sub-networks (e.g., sub-networks 200 including the clients 104 and 106 from FIG. 1) via the network 100. The sub-network 200 may include more, fewer, or different components. For example, the sub-network 200 may include a plurality of clients and a plurality of authoritative DNS servers.

As discussed above, the client 102 may include a personal computer workstation, mobile or otherwise, a wireless device such as a personal digital assistant or a smart phone, an enterprise scale computing platform such as a mainframe computer server, or smart device, or may include an entire intranet or other private network that is coupled with the sub-network 200 (and thus the network 100). The client initiates data interchanges with other computers, such as the recursive DNS server 202 and/or the authoritative DNS server 204. These data interchanges may involve the client 102 requesting a DNS translation or content from the recursive DNS server 202, for example, and the recursive DNS server 202 providing a result of the translation request or content in response to the request. While the disclosed embodiments will be discussed with reference to the interaction between R-DNS servers and A-DNS servers with respect to translation queries made by an R-DNS server to an A-DNS server, and the responses provided thereby, it will be appreciated that the disclosed embodiments are applicable to any client-server interaction where a client makes a request for a response from a server, which may receive such requests from multiple clients, and the client operation depends on timely receipt of a response from the server. In such situations, the disclosed embodiment may act to detect when the server is in distress, or otherwise overloaded, and likely not capable of providing a timely response. In this scenario, the disclosed embodiments may respond on behalf of the non-responding server, as described, such that the requesting client may take suitable action.

In one embodiment, the recursive DNS server 202 locates and retrieves DNS records from one or more authoritative DNS servers (e.g., the authoritative DNS server 204) on behalf of the client 102. The recursive DNS server 202 may include a personal computer workstation, an enterprise scale computing platform or other computer system as are known in the art. The recursive DNS server 202 may respond to requests from client 102 over the sub-network 200. In response to the request, the recursive DNS server 202 provides DNS records (e.g., an address) requested address or content to the client 102, which may or may not require some sort of processing by the recursive DNS server 202 or another computer to produce the requested response. For example, the recursive DNS server 202 may not itself be an authoritative source, and the recursive DNS server 202 may locate and retrieve DNS records from one or more authoritative DNS servers (e.g., the authoritative DNS server 204). The recursive DNS server 202 may cache answers/translations received from the authoritative DNS server 204, for example, but is not an authoritative source.

The authoritative DNS server 204 stores definitive DNS records mapping names to addresses for one or more domains. Like the recursive DNS server 202, the authoritative DNS server 204 may include information about a personal computer workstation, an enterprise scale computing platform or other computer system as are known in the art. The authoritative DNS server 204 may respond to requests from the recursive DNS server 202 over the sub-network 200. In response to the request, the authoritative DNS server 204 provides the requested data or content to the client recursive DNS server 202.

Authoritative DNS server complexes may be much smaller than recursive DNS server complexes. Authoritative DNS servers may thus be easier to overload. Accordingly, some types of DOS attacks (e.g., the "Nonsense Name" attack) are directed more towards the authoritative DNS server than the recursive DNS server. In such an attack, a zone (e.g., a distinct portion of the domain name space of the DNS for which a single manager has administrative responsibility) may be chosen to attack, random domain names (e.g., nonsense names) are generated in the zone (e.g., by multiple clients that are using a number of recursive DNS servers), and a number of queries for the random domain names are sent to their recursive DNS servers. The recursive DNS servers send queries to the associated authoritative DNS servers, and the authoritative DNS servers respond that the random domain names do not exist. Because each of the nonsense names is unique, the recursive DNS servers will not have a cached response for the nonsense name. Instead, the recursive DNS servers ask the authoritative DNS servers. The queries for the random domain names may overwhelm both the recursive DNS server and the authoritative DNS servers. The authoritative DNS server may be more easily overwhelmed, as there may be multiple recursive DNS servers sending translation requests for nonsense names.

Without use of the present embodiments, such DOS attacks may be successful. Although the recursive DNS server validates that the format of a given query is correct, the recursive DNS server does not know if the domain name (e.g., all of the multiple parts) maps to a valid machine or if the domain name is a random string. The recursive DNS server asks the authoritative DNS server to answer this question due to the inability of the recursive DNS server to know about a name the recursive DNS server has never processed. A DOS attack generates a large number of unique names and floods recursive DNS servers, and each of the recursive DNS servers asks the authoritative DNS server. This may lead to resource starvation in the authoritative DNS server and in the recursive DNS servers.

The flow optimizer 206 is located, for example, between the recursive DNS server 202 and the authoritative DNS server 204 (e.g., upstream of the recursive DNS server 202 and downstream of the authoritative DNS server 204). In one embodiment, the flow optimizer 206 is the edge device described above or a component thereof or application executing thereon. If the flow optimizer is an application or separate component, the edge device may intercept the packets and hand the packets to the flow optimizer application/component to be processed as described herein. The flow optimizer 206 intercepts translation requests (e.g., included in packets) sent by the recursive DNS server 202 and processes the intercepted packet according to the present embodiments.

In one embodiment, the flow optimizer 206 runs as an application executing on a device, such as a CloudShield CS-4000 DPPM or an IBM BladeCenter having a CloudShield DPI or PN 41 blade, including a system network interface, a packet interceptor, and a processor. The system network interface interfaces, or is otherwise operative, configured, or configurable to interface with the sub-network 200, for example, between the at least one recursive DNS server 202 and the at least one authoritative DNS server 204. The packet interceptor is coupled with the system network interface and intercepts, or is otherwise operative, configured, or configurable to intercept each of at least a subset of the packets sent from the at least one recursive DNS server 202 to the at least one authoritative DNS server 204. In one embodiment, the subset of packets includes all of the packets sent from the at least one recursive DNS server 202 to the at least one authoritative DNS server 204. The processor is coupled with the packet interceptor and determines, or is otherwise operative, configured, or configurable to determine, for each intercepted packet, whether the intercepted packet is transmitted from one of the recursive DNS servers 202 to one of the authoritative DNS servers 204 or is transmitted form one of the authoritative DNS servers 204 to one of the recursive DNS servers 202. The processor accounts, or is otherwise operative, configured, or configurable to account, for each of the authoritative DNS servers 204, each intercepted packet transmitter thereto or received therefrom based on the determination. The processor takes an action, or is otherwise further operative, configured, or configurable to take an action based on the account. In one embodiment, the packet interceptor is implemented by the processor or another processor.

The flow optimizer may protect any number of recursive DNS servers and/or authoritative DNS servers. The number of servers the flow optimizer is operable to detect may be based on implementation limits such as link speed and capacity, and resource limits.

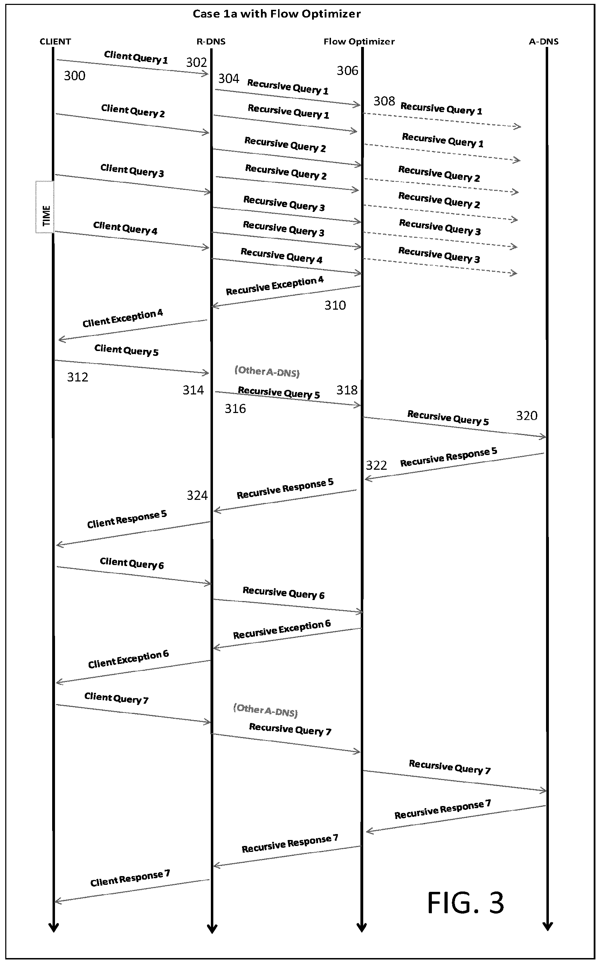

FIG. 3 shows a flowchart of one embodiment of a method to prevent overload of a source included in a network. The method may be performed using the network 100 and/or the sub-network 200 shown in Figures 1 and 2, respectively, or another network. FIG. 3 represents a single sub-network, though the flow optimizer shown in FIG. 3 may intercept and process client queries destined for authoritative DNS servers outside of the illustrated sub-network. The method is implemented in the order shown, but other orders may be used. Additional, different, or fewer acts may be provided. Similar methods may be used for preventing overload of a source in a network.

FIG. 3 shows client queries (e.g., packets) being generated by and sent from a client (e.g., the client 102) to a recursive DNS server (e.g., the recursive DNS server 202). The recursive DNS server may forward the client queries to an authoritative DNS server (e.g., the authoritative DNS server 204) for address translation. Without a flow optimizer, in the case of a DOS attack, DNS queries sent from the recursive DNS server to a non-responsive authoritative DNS server may cause resource exhaustion of the recursive DNS servers and the authoritative DNS servers. Resource exhaustion of the recursive DNS server may prevent DNS queries to other responsive authoritative DNS servers from being completed. For example, queries may be directed at the victim.com and the example.com domains. The authoritative DNS server associated with victim.com may be non-responsive, thus causing resource exhaustion of the recursive DNS server. During this time period, additional victim.com queries and any example.com queries may be lost. Though the resource exhaustion of the recursive DNS server prevents additional malicious DNS queries from being completed by the recursive DNS server, legitimate DNS queries are also not completed (e.g., lost) by the recursive DNS server.

Administrators of a local network (e.g., the sub-network 200) control the local authoritative DNS servers (e.g., the authoritative DNS servers 204) and associated content. Authoritative DNS servers respond to queries both from the local network and from the Internet, outside the local network. Authoritative DNS server administrators would not want to restrict client queries that are directed at the authoritative DNS servers of the local network, as the authoritative DNS server administrators would want the domain name advertised. Malicious intent cannot be inferred from a properly formed DNS query. The DNS infrastructure and protocol are based on an inherent assumption of trust. In other words, by default, traffic is assumed to be good with no malicious intent. A single client may be a source of both malicious DNS traffic and benign DNS traffic. The recursive DNS server cannot differentiate between malicious DNS queries and benign DNS queries. As such, the recursive DNS server may relay both malicious and benign queries to the authoritative DNS servers.

A flow optimizer intercepts the client queries sent from the recursive DNS server to an authoritative DNS server, as described above, for processing, and prevents resource exhaustion of the recursive DNS server. In act 300, the client sends a query (e.g., a DNS translation request) to the recursive DNS server via a network (e.g., the network 100 and/or the sub-network 200). During a DOS attack, the client or a plurality of clients may send a plurality of queries (e.g., for the same domain) to the recursive DNS server or plurality of recursive DNS servers, for example, address translation. FIG. 3 shows four initial client queries. More or fewer queries for the same domain, for example, may be sent from the client.

The network carries a plurality of queries (e.g., a plurality of packets). Each packet of the plurality of packets is transmitted, via the network, between one of at least one source and at least one intended destination intended by the one of the at least one source. In one embodiment, the one source is the recursive DNS server, and the at least one intended destination is the authoritative DNS server. In another embodiment, the one source is the client.

In act 302, the recursive DNS server receives the query sent by the client and locates a DNS record based on the received query. In one embodiment, the recursive DNS server stores relationships (e.g., tables) between domains (e.g., queried domains such as example.com) and associated authoritative DNS servers that store DNS records mapping the domains to addresses. The stored relationships may, for example, be in table form. The recursive DNS server determines an authoritative DNS server to send the query to, based on the received query (e.g., the domain to be translated included in the packet sent by the client). The recursive DNS server may cache answers received from the authoritative DNS servers for future use, but the recursive DNS server is not itself an authoritative source.

In act 304, the recursive DNS server forwards the query to the authoritative DNS server identified by the recursive DNS server in act 302. In one embodiment, the recursive DNS server generates a separate query for the authoritative DNS server based on the received query from the client. Any client query sent to the recursive DNS server may cause the recursive DNS server to generate a plurality of queries for the authoritative DNS server. Although FIG.2 shows the recursive DNS server generating and sending two queries based on the query received from the client, the recursive DNS server may generate any number of queries for the authoritative DNS server. For example, the recursive DNS server may generate multiple queries, e.g. up to 12, to one or more authoritative DNS servers based on the receipt of the query from the client. If the recursive DNS server does not receive a reply from the authoritative DNS server, the recursive DNS server may retry once every predetermined period of time (e.g., between one and five seconds).

In act 306, the network is interfaced with, and each of at least a subset of queries of the plurality of queries is intercepted at the interfacing and analyzed. The network may be interfaced with, and the subset of queries may be intercepted according to the description above. For example, the flow optimizer interfaces with the network and intercepts the subset of queries. The flow optimizer includes, for example, a processor and a memory.

The flow optimizer (e.g., the processor) determines, for each intercepted query, whether the intercepted query is transmitted from one of the at least one source and to one of the at least one intended destination or is transmitted from one of the at least one intended destination to one of the at least one source. For example, the processor determines whether the intercepted query is transmitted from, for example, the recursive DNS server to, for example, the authoritative DNS server (e.g., for the domain victim.com), or vice versa. The processor may inspect each packet of the plurality of packets to determine, for example, the source and/or the intended destination of the packet.

The processor accounts, for each of the at least one intended destination, each intercepted query transmitted thereto or received therefrom based on the determination of whether the intercepted query is transmitted from one of the at least one source and to one of the at least one intended destination or is transmitted from one of the at least one intended destination to one of the at least one source. For example, the processor of the recursive DNS server accounts for each query generated by the recursive DNS server and sent to the authoritative DNS server, and each response generated by the authoritative DNS server and transmitted to and received by the recursive DNS server. In one embodiment, a first subset of queries (e.g., packets) of the plurality of queries includes DNS queries transmitted from the recursive DNS server to the authoritative DNS server, and a second subset of queries of the plurality of queries include DNS responses transmitted from the authoritative DNS server to the recursive DNS server. In one embodiment, the recursive DNS server accounts for queries to and from a plurality of authoritative DNS servers within the network (e.g., the sub-network 200).

In one embodiment, the accounting includes incrementing or decrementing a counter associated with the at least one destination (e.g., the authoritative DNS server) to which the intercepted packet is going or from which the intercepted packet was received based on the determining. For example, the processor of the flow optimizer increments the counter, which is stored in the memory of the flow optimizer, when the intercepted query is destined for the authoritative DNS server and decrements the counter when the intercepted response is from the authoritative DNS server. In one embodiment, the memory stores a plurality of counters corresponding to a plurality of authoritative DNS servers, and the processor increments or decrements one of the counters based on the destination of the query or the source of the response, respectively.

The memory may be an internal register in the processor, a cache memory or a main memory, or some other form of storage. The counters may be incremented/decremented by reading the values from the memory, adjusting the value, and storing the adjusted value back in the memory. Alternatively, the modified value may be stored to overwrite the previously stored value. Instead of a count, the system may store a data value into successive locations of an array of memory locations. Once the array is filled, the predetermined threshold is exceeded. To reset, the array is cleared. Actual hardware based circuits (e.g., a binary counting logic circuit) may also be used.

The processor may increment or decrement the counter by any number of values for each intercepted query. For example, the processor may increment the counter by one for each intercepted query destined for the authoritative DNS server and may decrement the counter by two for each intercepted query from the authoritative DNS server. This may force binary behavior rather than "shades of gray" about the availability of the authoritative DNS server.

After each accounting, the processor compares the counter to a predetermined threshold. The processor may compare the counter to the predetermined threshold to determine whether the counter is greater than, or greater than or equal to the predetermined threshold. In one embodiment, the predetermined threshold is 100. The predetermined threshold is, however, a tunable parameter. A predetermined threshold of 100 allows a maximum of, for example, 100 outstanding queries to the authoritative DNS server. The predetermined threshold may be stored in the memory of the flow optimizer or another memory.

The processor of the flow optimizer takes an action based on the accounting of act 306. For example, the processor takes a first action 308 when a difference between the accounted for intercepted packets transmitted to one of the at least one intended destination is less than the accounted for intercepted packets received from the one of the at least one intended destination by a threshold (e.g., the predetermined threshold). In other words, the processor takes the first action 308 when the counter is less than, or less than or equal to the predetermined threshold. In one embodiment, the first action 308 includes allowing the intercepted query to continue to the intended destination (e.g., the authoritative DNS server). The first action 308 may include other actions such as, for example, deep packet inspect, pattern matching, or other actions. In one embodiment, the flow optimizer has an in-band learning capability and uses intelligence based on an offline analysis heuristic. For example, the offline analysis may be used to handle requests from reaching a target authoritative DNS server.

FIG. 3 shows six queries allowed to continue on to the authoritative DNS server before the predetermined threshold is reached or exceeded (e.g., the last six queries before the 100 query threshold is reached). The authoritative DNS server is non-responsive, and the flow optimizer allows the queries to continue on to the authoritative DNS server until the predetermined threshold is reached or exceeded.

The processor takes a second action 310 when a difference between the accounted for intercepted packets transmitted to one of the at least one intended destination exceeds the accounted for intercepted packets received from the one of the at least one intended destination by the predetermined threshold. In other words, the processor takes the second action 310 when the counter exceeds, or exceeds or equals the predetermined threshold. In one embodiment, the second action 310 includes deletion of the intercepted packet, and generation and transmission of a response to the query, to the recursive DNS server. The response to the query may be a synthetic response to the source of the request. The response may identify the status of the authoritative DNS server the recursive DNS server is trying to reach. For example, the response may indicate that the authoritative DNS server is overloaded and to retry again in a particular amount of time. The recursive DNS server may forward the response generated by the recursive DNS server to the source of the request or may generate a separate response for transmission to the source of the request.

In one embodiment, the flow optimizer tracks the number of responses to the flow optimizer, how many authoritative DNS servers are being tracked, when a synthetic response is returned, and/or other data. The flow optimizer acts on behalf of the unavailable authoritative DNS server and generates an immediate response rather than waiting for a time out and an inferred response by the recursive DNS server. The flow optimizer may generate a protocol specific (e.g., DNS) error response on behalf of the authoritative DNS server to prevent resource depletion. The flow optimizer may generate a log (e.g., a syslog) with an original query.

Once the counter is greater than, or greater than or equal to the predetermined threshold, the processor of the flow optimizer may start a timer and/or identify a time the counter equaled or exceeded the predetermined threshold. The processor may reset the counter after a predetermined amount of time, and the processor may resume transmitting the queries to the authoritative DNS server.

In one embodiment, the flow optimizer monitors the time between queries sent to the authoritative DNS server and responses therefrom. The flow optimizer determines when the time difference in increasing (i.e., the authoritative server appears to be slowing down). The flow optimizer may delete queries and generate and transmit responses to be transmitted to the client via the recursive DNS server based on the time difference.

FIG. 3 shows a time period before, during and after the counter is equaled or exceeded. The query labeled "Client Query 4" is the first query sent by the client after the counter is equaled or exceeded. The query labeled "Client Query 5" illustrates an advantage of the present embodiments over the prior art. Without the flow optimizer, "Client Query 5" and corresponding "Recursive Query 5" would be lost due to resource exhaustion of the recursive DNS server. Since the flow optimizer prevents resource exhaustion of the recursive DNS server by responding to queries from the recursive DNS server once the counter has been equaled or exceeded and thus preventing the recursive DNS server from waiting for replies that may never come from the authoritative DNS server, queries to other authoritative DNS servers, which are responsive, may be processed.

In act 312, the client or another client transmits a query for another domain (e.g., example.com) to the recursive DNS server. The recursive DNS server receives the query sent by the client and in act 314, locates a DNS record based on the received query. In act 316, the recursive DNS server forwards the query or generates and transmits a new query (e.g., "Recursive Query 5) to the authoritative DNS server identified by the recursive DNS server in act 314. In act 318, the flow optimizer intercepts the query and assuming the counter associated with the identified authoritative DNS server is below the predetermined threshold or another predetermined threshold, the flow optimizer allows the query to continue on to the identified authoritative DNS server. In act 320, the identified authoritative DNS server executes the address translation and transmits a response (e.g., a result of the address translation) to the recursive DNS server. In act 322, the flow optimizer intercepts the response and accounts for the response (e.g., decrements the associated counter). The flow optimizer allows the response to continue on to the recursive DNS server, and in act 324, the recursive DNS server forwards the response to the originating client or generates a new response to be transmitted to the originating client. "Client Query 7" in FIG. 3 illustrates another example of a query to and response from a responsive authoritative DNS server during the time period after the counter associated with the non-responsive authoritative DNS server is equaled or exceeded and before the counter associated with the non-responsive authoritative DNS server is reset. "Client Query 6" illustrates another example of a query to the non-responsive authoritative DNS server during the time period after the counter associated with the non-responsive authoritative DNS server is equaled or exceeded and before the counter associated with the non-responsive authoritative DNS server is reset. As described above, the flow optimizer deletes the query and generates a response for the client via the recursive DNS server.

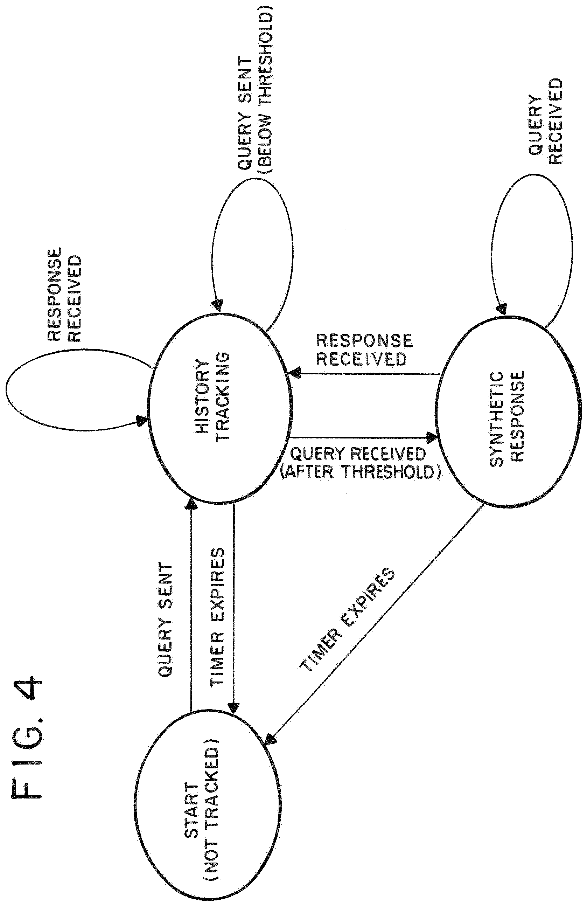

FIG. 4 is an exemplary state diagram illustrating the method of FIG. 3. Figure 4 illustrates the accounting of the received queries and responses (e.g., with a counter), and the generation of synthetic responses when the predetermined threshold is reached or exceeded. When a timer expires after the predetermined threshold is reached or exceeded, the counter is reset, and the received queries and responses are again accounted.

In one embodiment, an apparatus for facilitating communications between a client and a server over a network are provided. The apparatus includes a processor coupled with the network. The network transmits, or is otherwise operative, configured, or configurable to transmit a plurality of translation requests. The plurality of translation requests includes a translation request generated by the client. The translation request includes an address identifying the server. The translation request is directed, by the client, to an address translator separate from the processor. The address translator is coupled with the network. The processor selectively intercepts, or is otherwise operative, configured, or configurable to selectively intercept the translation request from among the plurality of translation requests prior to receipt by the address translator. The selective interception is determined based on a criteria other than only that the translation request is one of the plurality of translation requests. The criteria may be whether a source of the translation request is a subscriber to services provided with the apparatus (e.g., prevention of overload of a recursive DNS server). The address translator translates, or is otherwise operative, configured, or configurable to translate the address into a translated address when the translation request is not selectively intercepted. The address translator is further operative return the translated address to the client via the network, thereby facilitating the communications between the client and the server. The processor analyzes, or is otherwise operative, configured, or configurable to analyze the selectively intercepted translation request.

For example, the processor determines, or is otherwise operative, configured, or configurable to determine, for each intercepted translation request, whether the intercepted translation request is transmitted from one of at least one source of the network to one of at least one intended destination of the network, or is transmitted from one of the at least one intended destination to one of the at least one source. The processor accounts, or is otherwise further operative, configured, or configurable to account, for each of the at least one intended destination, each intercepted packet transmitter thereto or received therefrom based on the determining. The processor takes an action, or is otherwise further operative, configured, or configurable to take an action based on the accounting.

The flow optimizer detects that an authoritative DNS server for a domain is non-responsive. The flow optimizer generates a response to a recursive DNS server on behalf of the authoritative DNS server when the condition is detected, and the original query is not forwarded to the authoritative DNS server. The flow optimizer only generates responses for the non-responsive authoritative DNS servers and does not generate responses for responsive authoritative DNS servers. The functionality prevents resource exhaustion on the recursive DNS server and allows the recursive DNS server to continue to query other domains. This functionality also reduces the load on the non-responsive authoritative DNS server. When the non-responsive authoritative DNS server become responsive again, the flow optimizer may automatically allow traffic to flow in the normal case.

The flow optimizer may be used to protect any number of other servers by tracking outstanding queries or requests. For example, the flow optimizer of the present embodiments may be used to protect a web server (e.g., tracking GET requests). The flow optimizer may protect other computer systems from overload.

It will be appreciated that whether the disclosed counters are incremented with each request and decremented with each response thereto, or vice versa, and whether the disclosed action is taken when the counter equals the threshold value, exceeds the threshold value or falls below the threshold value, are implementation dependent and all such implementations disclosed herein or later developed are contemplated herein.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method of transparently interfacing to a network (100), the network (100) carrying a plurality of packets, each packet of the plurality of packets being transmitted, via the network (100), between one of at least one source and at least one intended destination intended by the one of the at least one source, the method comprising:
interfacing with the network (100) between each of the at least one source and each of the at least one intended destination so as to be able to intercept any packet of the plurality of packets transmitted therebetween;
intercepting each of at least a subset of packets of the plurality of packets at the interfacing; and
determining, for each intercepted packet, whether the intercepted packet is transmitted from one of the at least one source to one of the at least one intended destination or is transmitted from one of the at least one intended destination to one of the at least one source,
**characterised in that** the method further comprises:
accounting, by a processor, for each of the at least one intended destination, each intercepted packet transmitted thereto or received therefrom based on the determining; and
taking an action based on the accounting.

2. The method of claim 1, wherein taking the action further comprises taking the action when a difference between the accounted for intercepted packets transmitted to one of the at least one intended destination exceeds the accounted for intercepted packets received from the one of the at least one intended destination by a threshold.

3. The method of claim 2, wherein taking the action further comprises deleting the intercepted packet and transmitting a response thereto to the source thereof when the difference exceeds the threshold.

4. The method of claim 1, wherein the accounting comprises incrementing or decrementing a counter associated with the at least one destination to which the intercepted packet is going or from which the intercepted packet was received based on the determining.

5. The method of claim 4, wherein the accounting comprises incrementing the associated counter when the intercepted packet is determined to be transmitted to the one intended destination, and decrementing the associated counter when the intercepted packet is determined to be from the one intended destination.

6. The method of claim 5, further comprising comparing the counter to a predetermined threshold,
wherein taking the action based on the accounting comprises:
allowing the intercepted packet to continue to the one intended destination when the intercepted packed is determined to be transmitted to the one intended destination, and the associated counter does not exceed the predetermined threshold; and
deleting the intercepted packet when the intercepted packed is determined to be transmitted from the one intended destination, and the associated counter exceeds the predetermined threshold.

7. The method of claim 6, further comprising generating and transmitting a response to the intercepted packet when the intercepted packed is determined to be transmitted to the one intended destination, and the associated counter exceeds the predetermined threshold.

8. The method of claim 1, wherein the one source is a first DNS server (202), and the one intended destination is a second DNS server (204), and
wherein a first subset of packets of the plurality of packets include DNS queries transmitted from the first DNS server (202) to the second DNS server (204), and a second subset of packets of the plurality of packets include DNS responses transmitted from the second DNS server (204) to the first DNS server (202).

9. The method of claim 6, wherein the one intended destination is a first intended destination, the associated counter is a first counter, and the action is a first action, and
wherein the method further comprises:
determining whether the intercepted packet is transmitted by the one source to a second intended destination of the at least one intended destination or is transmitted by the second intended destination to the one source.
incrementing or decrementing a second counter associated with the second intended destination based on the determining of whether the intercepted packet is transmitted by the one source to a second intended destination of the at least one intended destination or is transmitted by the second intended destination to the one source; and
taking a second action, by the processor, based on the second counter.

10. The method of claim 9, wherein the processor is operable to take the second action based on the second associated counter when the second associated counter is above the predetermined threshold.

11. The method of claim 6, further comprising resetting the associated counter once a predetermined amount of time has elapsed after the counter is at or above the predetermined threshold.

12. A system for transparently interfacing to a network (100), the network (100) carrying a plurality of packets, each packet of the plurality of packets being transmitted, via the network (100), between at least one source and at least one intended destination intended by the at least one source, the system comprising:
a system network (100) interface operative to interface with the network (100)between each of the at least one source and each of the at least one intended destination so as to be able to intercept any packet of the plurality of packets transmitted therebetween;
a packet interceptor coupled with the system network (100) interface and operative to intercept each of at least a subset of packets of the plurality of packets at the interfacing; and
a processor coupled with the packet interceptor and operative to:
determine, for each intercepted packet, whether the intercepted packet is transmitted from one of the at least one source to one of the at least one intended destination or is transmitted from one of the at least one intended destination to one of the at least one source,
**characterised in that** the processor is further operative to:
account, for each of the at least one intended destination, each intercepted packet transmitted thereto or received therefrom based on the determination; and
take an action based on the account.

13. The system of claim 12, wherein the processor being operative to take the action based on the account comprises the processor being operative to take the action when a difference between the accounted for intercepted packets transmitted to one of the at least one intended destination exceeds the accounted for intercepted packets received from the one intended destination by a threshold.

14. The system of claim 13, wherein the processor being operative to take the action comprises the processor being operative to delete the intercepted packet and transmit a response thereto to the source thereof when the difference exceeds the threshold.

15. The system of claim 13, wherein the processor being configured to account for comprises the processor being configured to increment or decrement a counter associated with the at least one destination to which the intercepted packet is going or from which the intercepted packet was received based on the determination.

16. The system of claim 15, wherein the processor is further operative to compare the counter to the threshold,
wherein the processor being operative to take the action comprises the processor being operative to:
allow the intercepted packet to continue to the one intended destination when the intercepted packed is determined to be transmitted to the one intended destination, and the associated counter does not exceed the predetermined threshold; and
deleting the intercepted packet when the intercepted packed is determined to be transmitted from the one intended destination, and the associated counter exceeds the predetermined threshold.

17. A non-transitory computer readable storage medium storing instructions executable by one or more processors to prevent overload of a source included in a network (100), the network (100) carrying a plurality of packets, each packet of the plurality of packets being transmitted, via the network (100), between at least one source and at least one intended destination intended by the at least one source, the instructions comprising:
interfacing with the network (100) between each of the at least one source and each of the at least one intended destination so as to be able to intercept any packet of the plurality of packets transmitted therebetween;
intercepting each of at least a subset of packets of the plurality of packets at the interfacing;
determining, for each intercepted packet, whether the intercepted packet is transmitted from one of the at least one source to one of the at least one intended destination or is transmitted from one of the at least one intended destination to one of the at least one source;
**characterised in that** the instructions further comprise:
accounting for each of the at least one intended destination, each intercepted packet transmitted thereto or received therefrom based on the determining; and
taking an action based on the accounting.

18. The non-transitory computer-readable storage medium of claim 17, wherein taking the action further comprises taking the action when a difference between the accounted for intercepted packets transmitted to one of the at least one intended destination exceeds the accounted for intercepted packets received from the one of the at least one intended destination by a threshold.

19. The non-transitory computer-readable storage medium of claim 18, wherein taking the action further comprises deleting the intercepted packet and transmitting a response thereto to the source thereof when the difference exceeds the threshold.

20. The non-transitory computer-readable storage medium of claim 17, wherein the accounting comprises incrementing or decrementing a counter associated with the at least one destination to which the intercepted packet is going or from which the intercepted packet was received based on the determining.

## Patentansprüche

1. Verfahren zum transparenten Verbinden mit einem Netzwerk (100), wobei das Netzwerk (100) eine Vielzahl von Paketen transportiert, wobei jedes Paket aus der Vielzahl von Paketen über das Netzwerk (100) zwischen mindestens einer von ein oder mehreren Quellen und mindestens einem von den ein oder mehreren Quellen gewünschten Ziel übertragen wird, wobei das Verfahren umfasst:
Verbinden mit dem Netzwerk (100) zwischen jeder der ein oder mehreren Quellen und jedem der ein oder mehreren gewünschten Ziele, um in der Lage zu sein, jedes Paket aus der Vielzahl der dazwischen übertragenen Pakete abzufangen;
Abfangen jedes von mindestens einer Teilmenge von Paketen aus der Vielzahl von Paketen an der Schnittstelle; und
Bestimmen, für jedes abgefangene Paket, ob das abgefangene Paket von einer der ein oder mehreren Quellen zu einem der ein oder mehreren gewünschten Ziele übertragen wird oder ob es von einem der ein oder mehreren gewünschten Ziele zu einer der ein oder mehreren Quellen übertragen wird,
**dadurch gekennzeichnet, dass** das Verfahren ferner umfasst:
Erfassen, durch einen Prozessor, für jedes der ein oder mehreren gewünschten Ziele, eines jeden abgefangenen Pakets, das dorthin übertragen oder von dort empfangen wird, basierend auf dem Bestimmen; und
Durchführen einer Maßnahme auf der Grundlage der Erfassung.

2. Verfahren nach Anspruch 1, bei dem das Durchführen der Maßnahme ferner das Durchführen der Maßnahme umfasst, wenn eine Differenz zwischen den erfassten abgefangenen, an eines der ein oder mehreren gewünschten Ziele gesendeten Paketen die erfassten abgefangenen, von dem ein oder mehreren gewünschten Zielen her empfangenen Pakete um einen Schwellenwert übersteigt.

3. Verfahren nach Anspruch 2, worin das Durchführen der Maßnahme ferner das Löschen des abgefangenen Pakets und das Senden einer Antwort darauf an dessen Quelle umfasst, wenn die Differenz den Schwellenwert überschreitet.

4. Verfahren nach Anspruch 1, worin das Erfassen das Inkrementieren oder Dekrementieren, basierend auf dem Bestimmen, eines dem ein oder mehreren Zielen zugeordneten Zählers umfasst, zu dem das abgefangene Paket geht oder von dem das abgefangene Paket empfangen wurde.

5. Verfahren nach Anspruch 4, bei dem das Erfassen das Inkrementieren des zugehörigen Zählers, wenn bestimmt wird, dass das abgefangene Paket an das eine gewünschte Ziel übertragen wird, und das Dekrementieren des zugehörigen Zählers umfasst, wenn bestimmt wird, dass das abgefangene Paket von dem einen gewünschten Ziel kommt.

6. Verfahren nach Anspruch 5, ferner umfassend das Vergleichen des Zählers mit einem vorbestimmten Schwellenwert, wobei das Durchführen der Maßnahme basierend auf dem Erfassen umfasst:
Weiterziehenlassen des abgefangenen Pakets zu dem einen gewünschten Ziel, wenn bestimmt wird, dass das abgefangene Paket an das eine Ziel übertragen werden soll, und der zugehörige Zähler den vorgegebenen Schwellenwert nicht überschreitet; und
Löschen des abgefangenen Pakets, wenn bestimmt wird, dass das abgefangene Paket von dem einen gewünschten Ziel aus übertragen wird und der zugehörige Zähler den vorbestimmten Schwellenwert überschreitet.

7. Verfahren nach Anspruch 6, ferner umfassend das Erzeugen und Übertragen einer Antwort auf das abgefangene Paket, wenn bestimmt wird, dass das abgefangene Paket zu dem einen gewünschten Ziel übertragen werden soll, und der zugehörige Zähler den vorbestimmten Schwellenwert überschreitet.

8. Verfahren nach Anspruch 1, bei dem die eine Quelle ein erster DNS-Server (202) ist und das eine gewünschte Ziel ein zweiter DNS-Server (204) ist, und
bei dem eine erste Teilmenge von Paketen der Vielzahl von Paketen DNS-Anfragen beinhaltet, die von dem ersten DNS-Server (202) an den zweiten DNS-Server (204) übertragen werden,
und eine zweite Teilmenge von Paketen der Vielzahl von Paketen DNS-Antworten beinhaltet, die von dem zweiten DNS-Server (204) an den ersten DNS-Server (202) übertragen werden.

9. Verfahren nach Anspruch 6, bei dem das eine gewünschte Ziel ein erstes gewünschtes Ziel ist, der zugehörige Zähler ein erster Zähler ist und die Maßnahme eine erste Maßnahme ist, und wobei das Verfahren ferner umfasst:
Bestimmen, ob das abgefangene Paket von der einen Quelle zu einem zweiten gewünschten Ziel unter den ein oder mehreren gewünschten Zielen übertragen wird oder von dem zweiten gewünschten Ziel zu der einen Quelle übertragen wird;
Inkrementieren oder Dekrementieren eines dem zweiten gewünschten Ziel zugeordneten zweiten Zählers basierend auf dem Bestimmen, ob das abgefangene Paket von der einen Quelle zu einem zweiten beabsichtigten Ziel unter den ein oder mehreren gewünschten Zielen übertragen wird oder von dem zweiten gewünschten Ziel zu der einen Quelle übertragen wird; und
Durchführen einer zweiten Maßnahme durch den Prozessor, basierend auf dem zweiten Zähler.

10. Verfahren nach Anspruch 9, wobei der Prozessor betreibbar ist, um die zweite Maßnahme basierend auf dem zweiten zugehörigen Zähler durchzuführen, wenn der zweite zugehörige Zähler über dem vorgegebenen Schwellenwert liegt.

11. Verfahren nach Anspruch 6, ferner umfassend das Zurücksetzen des zugehörigen Zählers, sobald eine vorbestimmte Zeitspanne verstrichen ist, nachdem der Zähler bei oder über dem vorbestimmten Schwellenwert liegt.

12. System zum transparenten Verbinden mit einem Netzwerk (100), wobei das Netzwerk (100) eine Vielzahl von Paketen transportiert, wobei jedes Paket aus der Vielzahl von Paketen über das Netzwerk (100) zwischen mindestens einer Quelle und mindestens einem von der mindestens einen Quelle gewünschten Ziel übertragen wird, wobei das System umfasst:
eine System-Netzwerk (100)-Schnittstelle, die betreibbar ist, um mit dem Netzwerk (100) zwischen jeder der ein oder mehreren Quellen und jedem der ein oder mehreren gewünschten Ziele zu verbinden, um in der Lage zu sein, jedes Paket aus der Vielzahl der dazwischen übertragenen Pakete abzufangen;
einen Paketabfänger, der mit der System-Netzwerk (100)-Schnittstelle gekoppelt und betreibbar ist, um jedes von mindestens einer Teilmenge von Paketen aus der Vielzahl von Paketen an der Schnittstelle abzufangen; und
einen Prozessor, der mit dem Paketabfänger gekoppelt ist und betreibbar ist, um
für jedes abgefangene Paket zu bestimmen, ob das abgefangene Paket von einer der ein oder mehreren Quellen zu einem der ein oder mehreren gewünschten Ziele übertragen wird oder ob es von einem der ein oder mehreren gewünschten Ziele zu einer der ein oder mehreren Quellen übertragen wird,
**dadurch gekennzeichnet, dass** der Prozessor ferner betreibbar ist, um
für jedes der ein oder mehreren gewünschten Ziele, basierend auf dem Bestimmen jedes abgefangene Paket zu erfassen, das dorthin übertragen oder von dort empfangen wird; und
eine Maßnahme auf der Grundlage der Erfassung durchzuführen.

13. System nach Anspruch 12, bei dem die Betreibbarkeit des Prozessors zum Durchführen der auf der Erfassung basierenden Maßnahme umfasst, dass der Prozessor betreibbar ist, um die Maßnahme durchzuführen, wenn eine Differenz zwischen den erfassten abgefangenen, an eines der ein oder mehreren gewünschten Ziele gesendeten Paketen, die an eines der mindestens einen vorgesehenen Ziele übertragen werden, die erfassten abgefangenen, von dem ein oder mehreren gewünschten Zielen her empfangenen Pakete um einen Schwellenwert übersteigt.

14. System nach Anspruch 13, bei dem die Betreibbarkeit des Prozessors zum Durchführen der Maßnahme umfasst, dass der Prozessor betreibbar ist, um das abgefangene Paket zu löschen und eine Antwort darauf an seine Quelle zu senden, wenn die Differenz den Schwellenwert überschreitet.

15. System nach Anspruch 13, bei dem die Konfigurierung des der Prozessors zum Erfassen umfasst, dass der Prozessor konfiguriert ist, um einen dem mindestens einen Ziel, zu dem das abgefangene Paket geht oder von dem her das abgefangene Paket empfangen wurde, zugeordneten Zähler basierend auf der Bestimmung zu erhöhen oder zu verringern.

16. System nach Anspruch 15, worin der Prozessor ferner betreibbar ist, um den Zähler mit dem Schwellenwert zu vergleichen,
wobei die Betreibbarkeit des Prozessors zum Durchführen der Maßnahme umfasst, dass der Prozessor betreibbar ist, um:
das abgefangene Paket zu dem einen gewünschten Ziel weiterziehen zu lassen, wenn bestimmt wird, dass das abgefangene Paket an das eine Ziel übertragen werden soll, und der zugehörige Zähler den vorgegebenen Schwellenwert nicht überschreitet; und
das abgefangene Paket zu löschen, wenn bestimmt wird, dass das abgefangene Paket von dem einen gewünschten Ziel aus übertragen wird und der zugehörige Zähler den vorbestimmten Schwellenwert überschreitet.

17. Nichtflüchtiges, computerlesbares Speichermedium, das Anweisungen speichert, die von einem oder mehreren Prozessoren ausführbar sind, um eine Überlastung einer in einem Netzwerk (100) enthaltenen Quelle zu verhindern, wobei das Netzwerk (100) eine Vielzahl von Paketen transportiert, wobei jedes Paket aus der Vielzahl von Paketen über das Netzwerk (100) zwischen mindestens einer Quelle und mindestens einem von der mindestens einen Quelle gewünschten Ziel übertragen wird, wobei die Anweisungen umfassen:
Verbinden mit dem Netzwerk (100) zwischen jeder der ein oder mehreren Quellen und jedem der ein oder mehreren gewünschten Ziele, um in der Lage zu sein, jedes Paket aus der Vielzahl der dazwischen übertragenen Pakete abzufangen;
Abfangen jedes von mindestens einer Teilmenge von Paketen aus der Vielzahl von Paketen an der Schnittstelle; und
Bestimmen, für jedes abgefangene Paket, ob das abgefangene Paket von einer der ein oder mehreren Quellen zu einem der ein oder mehreren gewünschten Ziele übertragen wird oder ob es von einem der ein oder mehreren gewünschten Ziele zu einer der ein oder mehreren Quellen übertragen wird,
**dadurch gekennzeichnet, dass** die Anweisungen ferner umfassen:
Erfassen, für jedes der ein oder mehreren gewünschten Ziele, eines jeden abgefangenen Pakets, das dorthin übertragen oder von dort empfangen wird, basierend auf dem Bestimmen; und
Durchführen einer Maßnahme auf der Grundlage der Erfassung.

18. Nichtflüchtiges, computerlesbares Speichermedium nach Anspruch 17, bei dem das Durchführen der Maßnahme ferner das Durchführen der Maßnahme umfasst, wenn eine Differenz zwischen den erfassten abgefangenen, an eines der ein oder mehreren gewünschten Ziele gesendeten Paketen die erfassten abgefangenen, von dem ein oder mehreren gewünschten Zielen her empfangenen Pakete um einen Schwellenwert übersteigt.

19. Nichtflüchtiges, computerlesbares Speichermedium nach Anspruch 18, bei dem das Durchführen der Maßnahme ferner das Löschen des abgefangenen Pakets und das Senden einer Antwort darauf an dessen Quelle umfasst, wenn die Differenz den Schwellenwert überschreitet.

20. Nichtflüchtiges, computerlesbares Speichermedium nach Anspruch 17, bei dem das Erfassen das Inkrementieren oder Dekrementieren, basierend auf dem Bestimmen, eines dem ein oder mehreren Zielen zugeordneten Zählers umfasst, zu dem das abgefangene Paket geht oder von dem das abgefangene Paket empfangen wurde.

## Revendications

1. Procédé d'interfaçage transparent avec un réseau (100), le réseau (100) transportant une pluralité de paquets, chaque paquet de la pluralité de paquets étant transmis, via le réseau (100), entre l'une d'au moins une source et au moins une destination souhaitée par l'une de l'au moins une source, le procédé comprenant les étapes consistant à :
assurer l'interface avec le réseau (100) entre chacune de l'au moins une source et chacune de l'au moins une destination souhaitée de manière à pouvoir intercepter tout paquet de la pluralité de paquets transmis entre celles-ci ;
intercepter chacun d'au moins un sous-ensemble de paquets de la pluralité de paquets à l'interfaçage ; et
déterminer, pour chaque paquet intercepté, si le paquet intercepté est transmis à partir de l'une de l'au moins une source à l'une de l'au moins une destination souhaitée ou est transmis à partir de l'une de l'au moins une destination souhaitée à l'une de l'au moins une source,
**caractérisé en ce que** le procédé comprend en outre les étapes consistant à :
comptabiliser, par un processeur, pour chacune de l'au moins une destination souhaitée, chaque paquet intercepté transmis à celle-ci ou reçu à partir de celle-ci sur la base de la détermination ; et
prendre une mesure sur la base de la comptabilisation.

2. Procédé de la revendication 1, dans lequel la prise de la mesure comprend en outre la prise de la mesure lorsqu'une différence entre les paquets interceptés comptabilisés transmis à l'une de l'au moins une destination souhaitée dépasse les paquets interceptés comptabilisés reçus à partir de l'une de l'au moins une destination souhaitée d'un seuil.

3. Procédé de la revendication 2, dans lequel la prise de la mesure comprend en outre la suppression du paquet intercepté et la transmission d'une réponse à celui-ci à sa source lorsque la différence dépasse le seuil.

4. Procédé de la revendication 1, dans lequel la comptabilisation comprend l'incrémentation ou la décrémentation d'un compteur associé à l'au moins une destination à laquelle se rend le paquet intercepté ou à partir de laquelle le paquet intercepté a été reçu sur la base de la détermination.

5. Procédé de la revendication 4, dans lequel la comptabilisation comprend l'incrémentation du compteur associé lorsqu'il est déterminé que le paquet intercepté est transmis à la destination souhaitée, et la décrémentation du compteur associé lorsqu'il est déterminé que le paquet intercepté provient de la destination souhaitée.

6. Procédé de la revendication 5, comprenant en outre l'étape consistant à comparer le compteur à un seuil prédéterminé,
dans lequel la prise de la mesure sur la base de la comptabilisation comprend les étapes consistant à :
permettre au paquet intercepté de poursuivre jusqu'à la destination souhaitée lorsqu'il est déterminé que le paquet intercepté est transmis à la destination souhaitée, et que le compteur associé ne dépasse pas le seuil prédéterminé ; et
supprimer le paquet intercepté lorsqu'il est déterminé que le paquet intercepté est transmis à partir de la destination souhaitée, et que le compteur associé dépasse le seuil prédéterminé.

7. Procédé de la revendication 6, comprenant en outre les étapes consistant à générer et à transmettre une réponse au paquet intercepté lorsqu'il est déterminé que le paquet intercepté est transmis à la destination souhaitée, et que le compteur associé dépasse le seuil prédéterminé.

8. Procédé de la revendication 1, dans lequel la source est un premier serveur DNS (202), et la destination souhaitée est un deuxième serveur DNS (204), et
dans lequel un premier sous-ensemble de paquets de la pluralité de paquets comporte des requêtes DNS transmises à partir du premier serveur DNS (202) au deuxième serveur DNS (204), et un deuxième sous-ensemble de paquets de la pluralité de paquets comporte des réponses DNS transmises à partir du deuxième serveur DNS (204) au premier serveur DNS (202).

9. Procédé de la revendication 6, dans lequel la destination souhaitée est une première destination souhaitée, le compteur associé est un premier compteur, et la mesure est une première mesure, et
dans lequel le procédé comprend en outre les étapes consistant à :
déterminer si le paquet intercepté est transmis par la source à une deuxième destination souhaitée de l'au moins une destination souhaitée ou est transmis par la deuxième destination souhaitée à la source ;
incrémenter ou décrémenter un deuxième compteur associé à la deuxième destination souhaitée sur la base de la détermination du fait que le paquet intercepté est transmis par la source à une deuxième destination souhaitée de l'au moins une destination souhaitée ou est transmis par la deuxième destination souhaitée à la source ; et
prendre une deuxième mesure, par le processeur, sur la base du deuxième compteur.

10. Procédé de la revendication 9, dans lequel le processeur fonctionne pour prendre la deuxième mesure sur la base du deuxième compteur associé lorsque le deuxième compteur associé dépasse le seuil prédéterminé.

11. Procédé de la revendication 6, comprenant en outre l'étape consistant à réinitialiser le compteur associé une fois qu'une durée prédéterminée s'est écoulée après que le compteur est au seuil prédéterminé ou le dépasse.

12. Système d'interfaçage transparent avec un réseau (100), le réseau (100) transportant une pluralité de paquets, chaque paquet de la pluralité de paquets étant transmis, via le réseau (100), entre au moins une source et au moins une destination souhaitée par l'au moins une source, le système comprenant :
une interface de réseau de système (100) fonctionnant pour assurer l'interface avec le réseau (100) entre chacune de l'au moins une source et chacune de l'au moins une destination souhaitée de manière à pouvoir intercepter tout paquet de la pluralité de paquets transmis entre celles-ci ;
un intercepteur de paquets couplé à l'interface de réseau de système (100) et fonctionnant pour intercepter chacun d'au moins un sous-ensemble de paquets de la pluralité de paquets à l'interfaçage ; et
un processeur couplé à l'intercepteur de paquets et fonctionnant pour :
déterminer, pour chaque paquet intercepté, si le paquet intercepté est transmis à partir de l'une de l'au moins une source à l'une de l'au moins une destination souhaitée ou est transmis à partir de l'une de l'au moins une destination souhaitée à l'une de l'au moins une source,
**caractérisé en ce que** le processeur fonctionne en outre :
comptabiliser, pour chacune de l'au moins une destination souhaitée, chaque paquet intercepté transmis à celle-ci ou reçu à partir de celle-ci sur la base de la détermination ; et
prendre une mesure sur la base de la comptabilisation.

13. Système de la revendication 12, dans lequel le fait que le processeur fonctionne pour prendre la mesure sur la base de la comptabilisation comprend le fait que le processeur fonctionne pour prendre la mesure lorsqu'une différence entre les paquets interceptés comptabilisés transmis à l'une de l'au moins une destination souhaitée dépasse les paquets interceptés comptabilisés reçus à partir de la destination souhaitée d'un seuil.

14. Système de la revendication 13, dans lequel le fait que le processeur fonctionne pour prendre la mesure comprend le fait que le processeur fonctionne pour supprimer le paquet intercepté et pour transmettre une réponse à celui-ci à sa source lorsque la différence dépasse le seuil.

15. Système de la revendication 13, dans lequel le fait que le processeur est configuré pour comptabiliser pour comprendre le fait que le processeur est configuré pour incrémenter ou décrémenter un compteur associé à l'au moins une destination à laquelle se rend le paquet intercepté ou à partir de laquelle le paquet intercepté a été reçu sur la base de la détermination.

16. Système de la revendication 15, dans lequel le processeur fonctionne en outre pour comparer le compteur au seuil,
dans lequel le fait que le processeur fonctionne pour prendre la mesure comprend le fait que le processeur fonctionne pour :
permettre au paquet intercepté de poursuivre jusqu'à la destination souhaitée lorsqu'il est déterminé que le paquet intercepté est transmis à la destination souhaitée, et que le compteur associé ne dépasse pas le seuil prédéterminé ; et
supprimer le paquet intercepté lorsqu'il est déterminé que le paquet intercepté est transmis à partir de la destination souhaitée, et que le compteur associé dépasse le seuil prédéterminé.

17. Support non transitoire de stockage lisible par ordinateur stockant des instructions exécutables par un ou plusieurs processeurs pour empêcher une surcharge d'une source incluse dans un réseau (100), le réseau (100) transportant une pluralité de paquets, chaque paquet de la pluralité de paquets étant transmis, via le réseau (100), entre au moins une source et au moins une destination souhaitée par l'au moins une source, les instructions comprenant :
l'interfaçage avec le réseau (100) entre chacune de l'au moins une source et chacune de l'au moins une destination souhaitée de manière à pouvoir intercepter tout paquet de la pluralité de paquets transmis entre celles-ci ;
l'interception de chacun d'au moins un sous-ensemble de paquets de la pluralité de paquets à l'interfaçage ;
la détermination, pour chaque paquet intercepté, du fait que le paquet intercepté est transmis à partir de l'une de l'au moins une source à l'une de l'au moins une destination souhaitée ou est transmis à partir de l'une de l'au moins une destination souhaitée à l'une de l'au moins une source ;
**caractérisé en ce que** les instructions comprennent en outre :
la comptabilisation, pour chacune de l'au moins une destination souhaitée, de chaque paquet intercepté transmis à celle-ci ou reçu à partir de celle-ci sur la base de la détermination ; et
la prise d'une mesure sur la base de la comptabilisation.

18. Support non transitoire de stockage lisible par ordinateur de la revendication 17, dans lequel la prise de la mesure comprend en outre la prise de la mesure lorsqu'une différence entre les paquets interceptés comptabilisés transmis à l'une de l'au moins une destination souhaitée dépasse les paquets interceptés comptabilisés reçus à partir de l'une de l'au moins une destination souhaitée d'un seuil.

19. Support non transitoire de stockage lisible par ordinateur de la revendication 18, dans lequel la prise de la mesure comprend en outre la suppression du paquet intercepté et la transmission d'une réponse à celui-ci à sa source lorsque la différence dépasse le seuil.

20. Support non transitoire de stockage lisible par ordinateur de la revendication 17, dans lequel la comptabilisation comprend l'incrémentation ou la décrémentation d'un compteur associé à l'au moins une destination à laquelle se rend le paquet intercepté ou à partir de laquelle le paquet intercepté a été reçu sur la base de la détermination.
